(19) Europäisches Patentamt
European Patent Office
Office européen des brevets

(11) **EP 4 394 912 A1**

(12) **EUROPEAN PATENT APPLICATION**
published in accordance with Art. 153(4) EPC

(43) Date of publication:
**03.07.2024 Bulletin 2024/27**

(21) Application number: **23771123.9**

(22) Date of filing: **16.03.2023**

(51) International Patent Classification (IPC):
**H01M 4/04** (2006.01)   **H01M 4/139** (2010.01)
**H01M 10/052** (2010.01)

(52) Cooperative Patent Classification (CPC):
**H01M 4/04; H01M 4/13; H01M 4/139; H01M 10/052**

(86) International application number:
**PCT/KR2023/003552**

(87) International publication number:
**WO 2023/177244 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.03.2022 KR 20220032853**

(71) Applicant: **LG Energy Solution, Ltd.
Seoul 07335 (KR)**

(72) Inventors:
- **YOON, Kyung-Hwan
  Daejeon 34122 (KR)**
- **SHIN, Dong-Mok
  Daejeon 34122 (KR)**
- **LEE, Nam-Jeong
  Daejeon 34122 (KR)**
- **YOO, Kwang-Ho
  Daejeon 34122 (KR)**

(74) Representative: **Plasseraud IP
66, rue de la Chaussée d'Antin
75440 Paris Cedex 09 (FR)**

(54) **FILM FOR SECONDARY BATTERY DRY ELECTRODE**

(57)   The present disclosure relates to an electrode film for the manufacture of a dry electrode for a secondary battery, a dry electrode comprising the same and a method for manufacturing the same. The electrode film according to an aspect of the present disclosure comprises a unit electrode film stacked in two or more layers, the unit electrode film comprising a fibrillized binder and an active material, wherein machine directions (MDs) of the unit electrode films in contact with each other among the two or more layers of unit electrode films are antiparallel to each other.

FIG. 3

**Description**

TECHNICAL FIELD

The present disclosure relates to an electrode film, a dry electrode and a secondary battery comprising the same.
The present application claims priority to Korean Patent Application No. 10-2022-0032853 filed on March 16, 2022 in the Republic of Korea, the disclosures of which are incorporated herein by reference.

BACKGROUND ART

Due to the increasing use of fossil fuels, there is a growing demand for the use of alternative energy and clean energy, and in such circumstances, many studies are being made in the field of energy generation and storage using electrochemistry.
Currently, a typical example of electrochemical devices using electrical and chemical energy is secondary batteries, and the range of application of secondary batteries is gradually expanding.
One of typical secondary batteries, lithium secondary batteries are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of application of lithium secondary batteries is expanding to an auxiliary power source through a grid.
A process of manufacturing a lithium secondary battery largely includes three steps: an electrode process, an assembly process and a forming process. The electrode process includes an active material mixing process, an electrode coating process, a drying process, a rolling process, a slitting process and a winding process.
The active material mixing process is a process of mixing coating materials for forming an electrode active layer in which electrochemical reaction occurs in the electrode, and specifically, an electrode active material which is the essential element of the electrode is mixed with an additive such as a conductive material, fillers, a binder for binding powder and adhering to a current collector, and a solvent for making viscous and dispersing power to prepare a flowable slurry.
The mixture composition for forming the electrode active layer is referred to as an electrode mixture in a broad sense.
Subsequently, the electrode coating process of coating the electrode mixture on an electrically conductive current collector and the drying process for removing a solvent from the electrode mixture are performed, followed by rolling, to manufacture the electrode with a predetermined thickness.
Meanwhile, defects such as pinholes or cracks may occur in the already formed electrode active layer due to evaporation of the solvent contained in the electrode mixture during the drying. Additionally, the active layer is not uniformly dried all over the entire region, and due to a difference in solvent evaporation rate, some regions get dried earlier and powder at the corresponding regions float, and some other regions get dried at a time interval, resulting in low quality of the electrode.
Accordingly, recently, many studies are being made to manufacture dry electrodes without solvents.
In general, a dry electrode is manufactured by laminating a free-standing film comprising an active material, a binder and a conductive material on a current collector. During the process, a high shear mixing process such as jet-milling is performed to fibrillize the binder, and in this instance, when the high shear mixing process is applied to the fragile active material, fine particles of small size are produced in large amounts, which may degrade the mechanical performance or the electrical and chemical performance, and in case that high shear mixing is too much, the produced binder fibers are broken, which makes the free-standing film less flexible. Additionally, the constituent components are attached to the inside of the equipment during the jet-milling and a flow of high pressure air is disturbed, resulting in clogged channels, and it is not favorable for mass production.
Therefore, there is an urgent need for the development of dry electrode manufacturing technology to solve the problem.

DISCLOSURE

Technical Problem

The present disclosure is directed to providing a free-standing film with improved mechanical properties in machine direction (MD) and transverse direction (TD) perpendicular to MD for use in dry electrodes with improved flexibility and mechanical properties by minimized granulation of an active material and maximized fibrillization of a binder and a method for manufacturing the same.
The present disclosure is further directed to providing a dry electrode comprising the free-standing film with improved mechanical properties in MD and TD and a method for manufacturing the same.

Technical Solution

To solve the above-described problem, according to an aspect of the present disclosure, there is provided an electrode film of the following embodiments.

According to a first embodiment, there is provided the electrode film comprising a unit electrode film stacked in two or more layers, the unit electrode film comprising a fibrillized binder and an active material, wherein machine directions (MDs) of the unit electrode films in contact with each other among the two or more layers of unit electrode films stacked are antiparallel to each other.

According to a second embodiment, in the first embodiment, an angle between the MDs of the unit electrode films in contact with each other among the two or more layers of unit electrode films may be more than 0° and 90° or less.

According to a third embodiment, in the first or second embodiment, an angle between the MDs of the unit electrode films in contact with each other among the two or more layers of unit electrode films may be 45°to 90°.

According to a fourth embodiment, in any one of the first to third embodiments, an average thickness of the electrode film may be 50 $\mu$m to 600 $\mu$m.

According to a fifth embodiment, in any one of the first to fourth embodiments, when measuring a tensile strength of the electrode film in accordance with ASTM D638, a ratio of the tensile strength measured in a direction perpendicular to the MD to the tensile strength measured in the MD of one of the two or more layers of unit electrode films stacked may be 0.3 or more.

According to a sixth embodiment, in any one of the first to fifth embodiments, when measuring an elastic modulus of the electrode film in accordance with ASTM D638, a ratio of the elastic modulus measured in a direction perpendicular to the MD to the elastic modulus measured in the MD of one of the two or more layers of unit electrode films stacked may be 0.3 or more.

According to another aspect of the present disclosure, there is provided a method for manufacturing an electrode film of the following embodiments.

According to a seventh embodiment, there is provided the method for manufacturing the electrode film comprising mixing an active material and a binder to make a mixture; blending the mixture at high temperature low shear to make a mass of mixture; high shear grinding the mass of mixture to make an electrode powder mixture; feeding the electrode powder mixture in between a plurality of rolls to carry out calendaring to manufacture a unit electrode film; stacking the unit electrode film in two or more layers such that axes of MDs of the unit electrode films in contact with each other are antiparallel to each other to obtain a film stack; and calendaring the film stack.

According to an eighth embodiment, in the seventh embodiment, the stacking may comprise stacking such that an angle between the MDs of the unit electrode films in contact with each other among the two or more layers of unit electrode films is more than 0° and 90° or less.

According to a ninth embodiment, in the seventh or eighth embodiment, an average thickness of the electrode film may be 50 $\mu$m to 600 $\mu$m.

According to another aspect of the present disclosure, there is provided an electrode of the following embodiments.

According to a tenth embodiment, there is provided the electrode comprising a current collector; and the electrode film according to any one of the first to sixth embodiments on at least one surface of the current collector.

According to another aspect of the present disclosure, there is provided an electrode of the following embodiments.

According to an eleventh embodiment, there is provided the method for manufacturing the electrode comprising laminating the electrode film according to any one of the first to sixth embodiments on at least one surface of a current collector.

According to another aspect of the present disclosure, there is provided a secondary battery of the following embodiments.

According to a twelfth embodiment, there is provided the secondary battery in which an electrode assembly comprising a positive electrode, a negative electrode and a separator is included in a battery case together with a lithium containing nonaqueous electrolyte, wherein at least one of the positive electrode or the negative electrode is the electrode according to the tenth embodiment.

Advantageous Effects

According to the present disclosure, it may be possible to provide the free-standing film with improved mechanical properties in machine direction (MD) and a direction that is antiparallel to the MD, for use in dry electrodes, and the method for manufacturing the same.

Additionally, using the above-described film, it may be possible to provide the dry electrode with improved productivity and properties and the method for manufacturing the same.

Furthermore, according to an embodiment of the present disclosure, since high temperature low shear blending rather than high shear mixing is performed, and grinding is performed after the high temperature low shear blending, it may be possible to provide the dry electrode in which the granulation of the active material is minimized, the fibrillization of the binder is maximized and the disintegration of the fibrillized binder is minimized. Further, since blending through the blender and grinding are performed without high shear jet-milling, it may be possible to prevent clogged channels due to the agglomeration of the constituent components, and it is favorable for mass production.

DESCRIPTION OF DRAWINGS

FIG. 1 is a diagram showing a process of manufacturing a unit electrode film according to an embodiment of the present disclosure.

FIG. 2 is a diagram showing two unit electrode films stacked such that machine directions (MD) are antiparallel to each other according to an embodiment of the present disclosure.

FIG. 3 is a diagram showing an angle (θ) between MDs of two unit electrode films according to an embodiment of the present disclosure.

BEST MODE

Hereinafter, the present disclosure will be described in detail.

When used herein, "a MD of a unit electrode film" refers to a running direction of the unit electrode film in the process of manufacturing the unit electrode film.

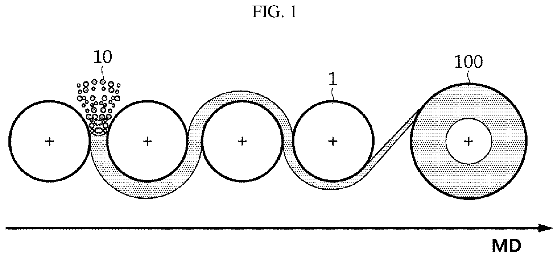

FIG. 1 is a diagram showing a process of manufacturing the unit electrode film by calendaring a electrode powder mixture according to an embodiment of the present disclosure. Referring to FIG. 1, when the electrode powder mixture 10 is fed in between a plurality of rolls 1, the unit electrode film 100 is formed along a direction. In this instance, the running direction of the manufactured unit electrode film may be defined as the MD of the unit electrode film.

The MD of the unit electrode film matches the orientation of fibers in the film, and thus may be identified through the orientation of fibers in the manufactured film. For example, the MD of the unit electrode film may be identified through a scanning electron microscopy (SEM) image of the unit electrode film. Additionally, it may be identified through a SEM image of a laminate film manufactured using the unit electrode film. The orientation of fibers identified through the SEM image may be determined to be the MD of each unit electrode film.

As described above, the method for manufacturing a dry electrode includes a process of manufacturing a free-standing film through a roll calendaring process. In this instance, the manufactured free-standing film has a difference between properties in MD and mechanical properties in a direction (a transverse direction (TD)) perpendicular to the MD.

The inventors recognized that the difference between properties in MD and TD of the free-standing film may be a defect factor in the electrode manufacturing process, and found that the electrode film manufactured by calendaring the electrode powder mixture has poorer mechanical properties in a direction that is not parallel to the MD than the mechanical properties in the MD, and the present disclosure is finally completed.

An electrode film according to an aspect of the present disclosure is characterized in that a unit electrode film is stacked in two or more layers, the unit electrode film comprising the fibrillized binder and the active material, and the MDs of the unit electrode films in contact with each other among the two or more layers of unit electrode films stacked are antiparallel to each other.

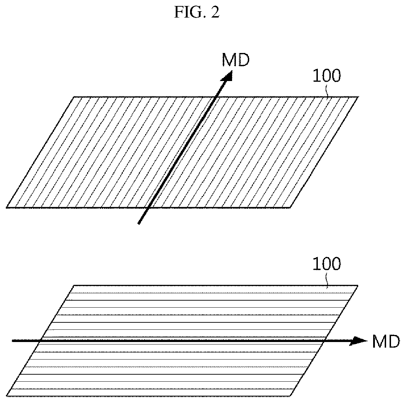

FIG. 2 is a diagram showing two unit electrode films 100 stacked such that the MDs are antiparallel to each other according to an embodiment of the present disclosure. Referring to FIG. 2, the electrode film according to the present disclosure comprises at least two unit electrode films stacked such that the MDs are not parallel to each other.

When used herein, "the MDs of the unit electrode films in contact with each other among the two or more layers of unit electrode films are antiparallel to each other" represents that the MDs of the unit electrode films in contact with each other are not parallel to each other when the two or more layers of unit electrode films are stacked.

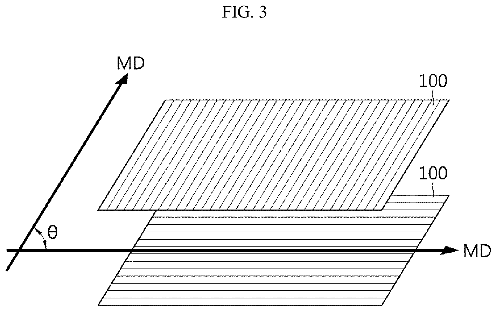

FIG. 3 is a diagram showing an angle (θ) between the MDs of the two layers of unit electrode films stacked such that the MDs are antiparallel to each other according to an embodiment of the present disclosure.

Referring to FIG. 3, the electrode film according to an aspect of the present disclosure comprises two or more layers of unit electrode films stacked such that the angle (θ) between the MDs of the unit electrode films in contact with each other is not 0° (or 180°).

According to an embodiment of the present disclosure, the angle between the MDs of the unit electrode films in contact with each other among the two or more layers of unit electrode films may be, for example, more than 0° and 90° or less, specifically 10° to 90°, specifically 45° to 90°, and more specifically 60° to 90°, 70° to 90°, 80° to 90°, 85° to 90°, or 90°. When the angle between the MDs of the unit electrode films in contact with each other is in the above-described range, it may be possible to provide the electrode film having improved mechanical properties in an arbitrary direction.

According to an embodiment of the present disclosure, the average thickness of the electrode film has the ordinary thickness of free-standing films, and is not limited to a particular thickness. For example, the average thickness of the electrode film may be 50 $\mu$m to 600 $\mu$m, but is not limited thereto. Since the electrode film comprises two or more layers of unit electrode films such that the MDs are antiparallel to each other, it may be possible to improve the mechanical properties, and maintain the average thickness of the electrode film at the ordinary level, thereby providing the electrode film having good electrical and chemical properties.

The average thickness of the electrode film may be measured through known means for measuring the thickness of each component in the corresponding technical field such as thickness measurement machine, SEM imaging or the like. In an embodiment of the present disclosure, the thickness of the electrode film may be measured using thickness measurement machine (Mitutoyo, VL-50S-B), but is not limited thereto.

Each of the unit electrode films stacked in two or more layers independently comprises the fibrillized binder and the active material.

When used herein, the 'fibrillized' binder refers to a fibril shaped binder by stretching the binder used to manufacture the film by a predetermined process for manufacturing the electrode film. The fibrillized binder may play a role in binding the active material which is the essential element of the electrode by forming a network. Additionally, the fibrillized binder may play a role in providing the adhesion strength of the electrode film to the current collector, but the shape and function of the fibrillized binder is not limited thereto.

In an embodiment of the present disclosure, the fibrillized binder which binds the active material obtained by forming a network in a fibril shape may be seen, for example, through a SEM image of the unit electrode film and/or the electrode film.

According to an embodiment of the present disclosure, in addition to the fibrillized binder and the active material, each unit electrode film may, independently, further comprise a conductive material.

In an embodiment of the present disclosure, the binder is not limited to a particular type and may include any binder that uniformly disperses the powdery material included in the electrode film such as the active material without causing a chemical change to the corresponding battery.

In an embodiment of the present disclosure, the binder may comprise, for example, polytetrafluoroethylene (PTFE), polyolefin, or a mixture thereof, specifically, polytetrafluoroethylene (PTFE), and more specifically, polytetrafluoroethylene (PTFE).

In another embodiment of the present disclosure, in case that the binder comprises polytetrafluoroethylene (PTFE), the PTFE may be included in an amount of 60 weight% or more based on the total weight of the binder.

In another embodiment of the present disclosure, the binder may further comprise at least one of polyethylene oxide (PEO), polyvinylidene fluoride (PVdF) or polyvinylidene fluoride-co-hexafluoropropylene (PVdF-HFP).

In an embodiment of the present disclosure, the binder may be, for example, included in an amount of 0.5 to 15 parts by weight based on 100 parts by weight of the active material. Specifically, the binder may be included in an amount of 0.5 to 15 parts by weight, 0.5 to 10 parts by weight, 1 to 5 parts by weight, or 1 to 3 parts by weight based on 100 parts by weight of the active material. When the amount of the binder satisfies the above-described range, the binder may be adequately fibrillized in the subsequent blending process, resulting in sufficient agglomeration to form a mass of mixture, thereby making it easy to manufacture the electrode film and improving the properties of the electrode film. In an embodiment of the present disclosure, in case that the electrode film is used to manufacture a positive electrode, the active material may be a positive electrode active material.

The positive electrode active material may comprise, for example, at least one of lithium transition metal oxide; lithium metal phosphate; lithium nickel-manganese-cobalt oxide; or oxide with partial substitution of other transition metal in lithium nickel-manganese-cobalt oxide, but is not limited thereto. Specifically, the positive electrode active material may comprise, for example, layered compounds such as lithium cobalt oxide ($LiCoO_2$), lithium nickel oxide ($LiNiO_2$) or compounds with one or more transition metal substitution; lithium manganese oxide of formula $Li_{1+x}Mn_{2-x}O_4$ (where x = 0 to 0.33), $LiMnO_3$, $LiMn_2O_3$, $LiMnO_2$; lithium copper oxide ($Li_2CuO_2$); vanadium oxide such as $LiV_3O_8$, $LiV_3O_4$, $V_2O_5$, $Cu_2V_2O_7$; Ni site lithium nickel oxide represented by formula $LiNi_{1-x}M_xO_2$ (where M = Co, Mn, Al, Cu, Fe, Mg, B or Ga, x = 0.01 to 0.3); lithium manganese composite oxide represented by formula $LiMn_{2-x}M_xO_2$ (where M = Co, Ni, Fe, Cr, Zn or Ta and x = 0.01 to 0.1) or $Li_2Mn_3MO_8$ (where M = Fe, Co, Ni, Cu or Zn); lithium nickel cobalt manganese aluminum oxide (NCMA) $Li_{1+x}(Ni_aCo_bMn_cAl_d)_{1-x}O_2$ (x = 0 to 0.03, a = 0.3 to 0.95, b = 0.01 to 0.35, c = 0.01 to 0.5, d = 0.001 ~ 0.03, a+b+c+d=1) with partial substitution of aluminum ion for Li in formula, for example, $Li[Ni_{0.73}Co_{0.05}Mn_{0.15}Al_{0.02}]O_2$; lithium metal phosphate $LiMPO_4$ (where M = Fe, CO, Ni, or Mn), disulfide compounds; $Fe_2(MoO_4)_3$, but is not limited thereto.

In another embodiment of the present disclosure, in case that the electrode film is used to manufacture a negative electrode, the active material may be a negative electrode active material.

The negative electrode active material may include, for example, carbon such as nongraphitizing carbon, graphite-based carbon; metal composite oxide such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Groups 1, 2 and 3 elements in the periodic table, halogen; $0 < x \leq 1$; $1 \leq y \leq 3$; $1 \leq z \leq 8$); lithium metal; lithium alloys; silicon-based alloys; tin-based alloys; silicon-based oxide such as $SiO$, $SiO/C$, $SiO_2$; metal oxide such as $SnO$, $SnO_2$, $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, and $Bi_2O_5$; conductive polymer such as polyacetylene; Li-Co-Ni based materials, but is not limited thereto.

In an embodiment of the present disclosure, the conductive material is not limited to a particular type and may include any material having conductive properties while not causing any chemical change to the corresponding battery. The conductive material may include, for example, graphite such as natural graphite or artificial graphite; carbon black-based carbon compounds such as carbon black, acetylene black, ketjen black, channel black, furnace black, lamp black, thermal black; conductive fibers such as carbon fibers or metal fibers; metal powder such as fluorocarbon, aluminum and nickel powder; conductive whiskers such as zinc oxide, potassium titanate; conductive metal oxide such as titanium oxide; conductive materials such as polyphenylene derivatives. Specifically, to uniformly mix the conductive material and improve conductivity, the conductive material may include activated carbon, graphite, carbon black, carbon nanotubes or a mixture thereof, and more specifically carbon black.

In an embodiment of the present disclosure, each unit electrode film may independently comprise the active material: the conductive material: the binder at a weight ratio of 80 to 99 parts by weight : 0 to 10 parts by weight : 0.5 to 10 parts by weight, and specifically 90 to 99 parts by weight : 0 to 5 parts by weight : 0.5 to 10 parts by weight. Alternatively, the weight ratio of the active material: the conductive material: the binder may be 80 to 99 parts by weight : 0.5 to 10 parts by weight : 0.5 to 10 parts by weight, and specifically 90 to 99 parts by weight : 0.5 to 5 parts by weight : 0.5 to 10 parts by weight.

In an embodiment of the present disclosure, each unit electrode film may further include, independently, fillers to suppress the expansion of the electrode. For example, the fillers may include, without limitation, any fibrous material that does not cause a chemical change to the corresponding battery, and for example, an olefin-based polymer such as polyethylene, polypropylene, glass fibers, carbon fibers or the like.

In an embodiment of the present disclosure, when the MD of one of the unit electrode films is set as a reference direction, the electrode film may have improved mechanical properties not only in the reference direction but also in a direction that is not parallel to the reference direction.

The improved mechanical properties of the electrode film according to an embodiment of the present disclosure may include tensile strength, elastic modulus and elongation at break commonly required for the electrode film, and the mechanical properties are not limited to a particular type.

In an embodiment of the present disclosure, when measuring the tensile strength of the electrode film in accordance with ASTM D638, a value of $TS_{TD}/TS_{MD}$ may be 0.3 or more, the $TS_{TD}/TS_{MD}$ being a ratio of the tensile strength ($TS_{TD}$) measured in the direction perpendicular to the MD (the reference direction) to the tensile strength ($TS_{MD}$) measured in the MD of one of the two or more layers of unit electrode films stacked. For example, when the electrode film comprises a first unit electrode film and a second unit electrode film stacked on the first unit electrode film such that the MD of the first unit electrode film and the MD of the second unit electrode film are antiparallel to each other, the value of $TS_{TD}/TS_{MD}$ may be 0.3 or more, the $TS_{TD}/TS_{MD}$ being a ratio of the tensile strength ($TS_{TD}$) of the electrode film measured in the direction perpendicular to the MD of the first unit electrode film to the tensile strength ($TS_{MD}$) of the electrode film measured in the MD of the first unit electrode film.

In an embodiment of the present disclosure, specifically, the ratio $TS_{TD}/TS_{MD}$ may be 0.3 or more, 0.4 or more, 0.5 or more, 0.6 or more, 0.7 or more, 0.8 or more, or 0.9 or more, and 1 or less. With the increasing number of unit electrode films stacked in the electrode film such that the MDs of the unit electrode films in contact with each other are antiparallel to each other, the mechanical properties of the electrode film may be uniformly improved in an arbitrary direction. Accordingly, with the increasing number of unit electrode films stacked, the ratio $TS_{TD}/TS_{MD}$ may converge to 1.

In an embodiment of the present disclosure, when measuring the elastic modulus of the electrode film in accordance with ASTM D638, a value of $M_{TD}/M_{MD}$ may be 0.3 or more, the $M_{TD}/M_{MD}$ being a ratio of the elastic modulus ($M_{TD}$) measured in the direction perpendicular to the MD (the reference direction) to the elastic modulus ($M_{MD}$) measured in the MD of one of the two or more layers of unit electrode films stacked. For example, when the electrode film comprises the first unit electrode film and the second unit electrode film stacked on the first unit electrode film such that the MD of the first unit electrode film and the MD of the second unit electrode film are antiparallel to each other, the value of $M_{TD}/M_{MD}$ may be 0.3 or more, the $M_{TD}/M_{MD}$ being a ratio of the elastic modulus ($M_{TD}$) of the electrode film measured in the direction perpendicular to the MD of the first unit electrode film to the elastic modulus ($M_{MD}$) of the electrode film measured in the MD of the first unit electrode film.

In an embodiment of the present disclosure, specifically, the ratio $M_{TD}/M_{MD}$ may be 0.3 or more, 0.4 or more, 0.5 or more, 0.6 or more, 0.7 or more, 0.8 or more, or 0.9 or more, and 1 or less. With the increasing number of unit electrode films stacked in the electrode film such that the MDs of the unit electrode films in contact with each other are antiparallel to each other, the mechanical properties of the electrode film may be uniformly improved in an arbitrary direction. Accordingly, with the increasing number of unit electrode films stacked, the ratio $M_{TD}/M_{MD}$ may converge to 1.

In another embodiment of the present disclosure, the number of unit electrode films stacked in the electrode film may be two or more, and specifically two to five, or two to four, or two to three. When the number of unit electrode films stacked satisfies the above-described range, it may be possible to properly maintain the thickness of the electrode film, thereby preventing the chipping of the active material due to high pressure applied when manufacturing the electrode film and improving the electrical properties and mechanical properties of the electrode film.

An electrode according to another aspect of the present disclosure comprises a current collector and the above-described electrode film on at least one surface of the current collector.

In an embodiment of the present disclosure, the current collector is not limited to a particular type and may include those having high conductivity without causing any chemical change to the battery, and may include, for example, stainless steel, aluminum, nickel, titanium, sintered carbon, copper or aluminum or stainless steel treated with carbon, nickel, titanium or silver on the surface. The current collector may have microtexture on the surface to increase the adhesion strength of the positive electrode active material, and may come in various forms, for example, a film, a sheet, a foil, a net, a porous body, a foam and a nonwoven. Further, the current collector may be coated with a conductive primer in part or in whole to reduce the resistance on the surface and improve the adhesion strength. Here, the conductive primer may comprise a conductive material and a binder, and the conductive material may include, without limitation, any material having conductive properties, and for example, a carbon-based material.

A method for manufacturing the electrode film according to another aspect of the present disclosure includes the following steps of:

> obtaining a mixture comprising the active material and the binder,
> blending the mixture at a high temperature low shear rate to manufacture a mass of mixture,
> high shear grinding the mass of mixture to manufacture the electrode powder mixture,
> feeding the electrode powder mixture in between a plurality of rolls to carry out calendaring to manufacture the unit electrode film,
> stacking the unit electrode film in two or more layers such that the MDs of the unit electrode films in contact with each other are antiparallel to each other to obtain a film stack, and
> calendaring the film stack,
> wherein the step of obtaining the mixture comprising the active material and the binder is a step of mixing the constituent components of the unit electrode film such as the active material and the binder, and optionally the conductive material and the additive at a predetermined mix ratio to obtain the mixture.

In the step of manufacturing the mixture, the mixing for obtaining the mixture is performed to uniformly distribute the active material and the binder, and optionally the conductive material and the additive. Since these constituent components are mixed in a form of powder, the mixing method is not limited to a particular method and may include a variety of methods that enable simple mixing. However, since the method is used to manufacture the dry electrode without solvents, the mixing may use a dry mixing process, and may be performed by putting these materials into a device such as a blender or a supermixer.

In an embodiment of the present disclosure, the mixing may be performed in the mixer at 5,000 rpm to 20,000 rpm for 30 seconds to 20 minutes, and specifically, at 10,000 rpm to 15,000 rpm for 30 seconds to 5 minutes, to ensure uniformity.

The step of manufacturing the mass of mixture is a step for fibrillizing the binder in the mixture manufactured as described above, and may be, for example, referred to as kneading.

In an embodiment of the present disclosure, high shear mixing such as jet-milling may be performed to fibrillize the binder, but low shear blending may be preferably performed to prevent granulation of the active material and breakage of the formed fibers.

In this instance, the blending may be, for example, performed through a kneader, but is not limited thereto.

In the blending step, the active material, the conductive material and the porous carbon powder are held or connected together by the fibrillization of the binder, to form the mass of mixture with 100% solids.

Specifically, the blending for manufacturing the mass of mixture may be performed at 10 rpm to 100 rpm for 1 minute to 30 minutes, and specifically, at 25 rpm to 50 rpm for 3 minutes to 7 minutes, and in this instance, the blending may be performed at the shear rate in a range between 10/s and 500/s for 1 minute to 30 minutes. More specifically, the shear rate may be in a range between 30/s and 100/s. Additionally, the blending step may be performed at high temperatures and pressure conditions that are equal to or higher than normal pressure, and more specifically, in the pressure conditions that are higher than normal pressure.

In an embodiment of the present disclosure, in the step of manufacturing the mass of mixture, the blending may be performed in a range between 70°C and 200°C, and specifically in a range between 90°C and 180°C or between 90°C and 150°C. When the blending is performed at low temperature outside of the above-described temperature range, the binder is not fibrillized well during the blending and agglomeration by the blending is poor, which makes it difficult to form a film during calendaring in the subsequent step, and when the blending is performed at too high temperature, the fibrillization of the binder takes place quickly, and subsequently, the already formed fibers may be broken by too high shear force.

In an embodiment of the present disclosure, in the step of manufacturing the mass of mixture, the blending may be performed at or above normal pressure, specifically 1 atm to 60 atm, or 1 atm to 30 atm, or 1 atm to 10 atm, or 1 atm to 3 atm, or 1.1 atm to 3 atm. In case that the blending is performed under too high pressure outside of the above-described pressure range, too high shear force and pressure is applied, the formed fibers may be broken or the density of the mass of mixture may be too high.

As described above, in an embodiment of the present disclosure, the blending may be preferably performed by low shear mixing at high temperature and pressure condition that is equal to or higher than normal pressure, rather than high shear mixing.

The step of manufacturing the electrode powder mixture from the mass of mixture is a step of grinding the mass of mixture to obtain the electrode powder. To directly form the mass of mixture into a film, a high pressure and high temperature process is required. The density of the film is too high or it fails to obtain a uniform film, so after the mass of mixture is ground to obtain the electrode powder, calendaring is performed on the obtained powder.

In an embodiment of the present disclosure, the grinding may be performed using a blender, or a grinder such as a cutter mill or a fine impact mill, but is not limited thereto, and specifically, the grinding may be performed at 500 rpm to 20000 rpm for 30 seconds to 10 minutes, and specifically at 1000 rpm to 10000 rpm for 30 seconds to 1 minute. When the grinding is performed at too low rpm or for a short time outside of the above-described range, the grinding is not adequately performed, failing to form a powder of suitable size for forming a film, and when the grinding is performed at too high rpm or for a long time, many fine particles may be formed from the mass of mixture.

In an embodiment of the present disclosure, the method may further include sieving the ground electrode powder before the calendaring after manufacturing the electrode powder mixture. In the sieving step, the powder for the electrode having a predetermined size or more may be obtained by filtering the ground electrode powder using a mesh having openings of the predetermined size or less.

Subsequently, the calendaring is performed using the electrode powder obtained as described above, or the sieved electrode powder to manufacture the unit electrode film.

The calendaring forms the electrode powder mixture into a film, and for example, may be a step of forming the electrode powder mixture into a film having the average thickness of 50 $\mu$m to 600 $\mu$m through rolling.

In this instance, the calendaring may be, for example, performed by rolls present on opposite sides, and in this instance, the roll temperature may be 25°C to 200°C, and the rotational speed of the rolls may be 10 rpm to 50 rpm.

When the calendaring step is performed, the film that performs the role of the electrode mixture may be manufactured. The film is also called a free-standing film.

When used herein, the electrode film manufactured through the calendaring is referred to as the unit electrode film.

After the calendaring, the step of obtaining the film stack includes stacking the unit electrode film in two or more layers such that the MDs of the unit electrode films in contact with each other are antiparallel to each other.

According to an embodiment of the present disclosure, the stacking may be performed such that the angle between the MDs of the unit electrode films in contact with each other among the two or more layers of unit electrode films is more than 0° and 90°. The angle between the MDs of the unit electrode films in contact with each other among the two or more layers of unit electrode films may be, for example, more than 0° and 90° or less, specifically 10° to 90°, specifically 45° to 90°, and more specifically 85° to 90°, or 90°.

According to an embodiment of the present disclosure, the film stack may be a stack of one to three unit electrode films in contact with each other such that the MDs are antiparallel to each other.

According to an embodiment of the present disclosure, the unit electrode film may be stacked in two or more layers, for example 2 to 5, 2 to 4 or 2 to 3 layers, but the present disclosure is not limited thereto.

Subsequently, the film stack obtained as described above undergoes calendaring to manufacture the electrode film.

The calendaring of the film stack may include rolling the film stack to a thickness of a single layer of electrode film. For example, the film stack may be rolled such that the average thickness of the manufactured electrode film is 50 $\mu$m to 300 $\mu$m.

In this instance, the calendaring may be, for example, performed by the rolls present on opposite sides, and in this instance, the roll temperature may be 25°C to 200°C, and the rotational speed of the rolls may be 0.1 rpm to 50 rpm.

Due to not comprising a solvent, the electrode film manufactured as described above has no or little flowability, and thus is easy to handle and may be formed into a desired shape for use in the manufacture of various types of electrodes. In addition, when the electrode film is used to manufacture the electrode, it may be possible to eliminate the drying process for solvent removal, thereby significantly improving the efficiency of the electrode manufacturing process, and solving the problem raised in the manufacture of the dry electrode, such as granulation of the active material or breakage of the fibrillized binder.

In addition, the electrode film comprising the two or more layers of unit electrode films stacked such that the MDs are antiparallel to each other may exhibit the improved mechanical properties in an arbitrary direction, thereby significantly reducing the defect rate when manufacturing the electrode.

A method for manufacturing an electrode according to another aspect of the present disclosure includes laminating the above-described electrode film on at least one surface of the current collector.

In an embodiment of the present disclosure, the lamination may be a step of rolling and attaching the electrode film to the current collector to the predetermined thickness. The lamination may be also performed by lamination rolls, and in this instance, the lamination rolls may be maintained at the temperature of room temperature (25°C) to 200°C, but is not limited thereto.

According to an embodiment of the present disclosure, the electrode manufactured by the manufacturing method includes the electrode film containing no solvent, and thus may be referred to as a dry electrode.

A secondary battery according to another aspect of the present disclosure is a secondary battery in which an electrode assembly comprising a positive electrode, a negative electrode and a separator is included in a battery case together with a lithium containing nonaqueous electrolyte, and the above-described electrode is used for at least one of the positive electrode or the negative electrode.

The detailed structure of the secondary battery is well known and its description is omitted.

The secondary battery according to the present disclosure may be included as a unit battery in an energy storage system, but the use of the present disclosure is not limited thereto.

The detailed structure of the energy storage system is well known and its description is omitted.

Hereinafter, the present disclosure will be described in more detail through examples, but the following examples are provided to describe the present disclosure by way of illustration, and the scope of the present disclosure is not limited thereto.

[Manufacture of dry electrode]

Comparative example 1

97g of lithium nickel cobalt manganese aluminum oxide (NCMA, $Li[Ni_{0.73}Co_{0.05}Mn_{0.15}Al_{0.02}]O_2$) as a positive electrode active material, 1g of carbon black as a conductive material and 2g of polytetrafluoroethylene (PTFE) as a binder were put into a blender and mixed at 15,000 rpm for 1 minute to obtain a mixture.

Subsequently, the temperature of a kneader (irie-shokai, PBV0.1) was stabilized to 150°C, the manufactured mixture was put into the kneader to carry out kneading at 50 rpm for 5 minutes under the pressure of 1.1 atm to obtain a mass of mixture.

The mass of mixture was put into a blender (Hanil, HMF-3260s) to carry out grinding at 10,000 rpm for 1 minute to obtain electrode powder.

Subsequently, the manufactured electrode powder was put into a lab roll press (roll temperature: 100°C, roll diameter: 160 mm, roll speed ratio 1.4) to manufacture a 90 $\mu$m thick electrode film.

Example 1

The electrode film manufactured in comparative example 1 was prepared as a unit electrode film. The prepared unit electrode film was stacked in two layers such that an angle between MDs is 90° and put into a lab roll press (roll temperature: 100°C, roll diameter: 160 mm, roll speed ratio 1.4) to carry out rolling again to manufacture a 90 $\mu$m thick electrode film.

Example 2

The electrode film manufactured in comparative example 1 was prepared as a unit electrode film. The prepared unit electrode film was stacked in two layers such that an angle between MDs is 45° and put into a lab roll press (roll temperature: 100°C, roll diameter: 160 mm, roll speed ratio 1.4) to carry out rolling again to manufacture a 90 $\mu$m thick electrode film.

[Evaluation of properties]

For each of the manufactured electrode films according to comparative example 1 and examples 1 and 2,

**EP 4 394 912 A1**

density, elastic modulus, tensile strength and elongation at break were evaluated by the following method, and the results are shown in the following Tables 1 and 2.

In the following Table 1, the MD direction of comparative example 1 denotes the running direction of the film when manufacturing the film (see FIG. 1), and the TD direction denotes the direction perpendicular to the MD direction of the manufactured film. Additionally, the MD direction of example 1 denotes the MD direction of the lower layer, and the TD direction denotes the direction perpendicular to the MD direction of the lower layer.

- Density measurement

: The manufactured film was cut into 5 cm X 5 cm (horizontal dimension X vertical dimension) to prepare a sample. The density was measured by dividing the weight of the sample film by the film volume (thickness x 25 cm$^2$).

- Tensile strength measurement

: The manufactured film was cut into 1 cm X 10 cm (horizontal dimension x vertical dimension) to prepare a sample. In accordance with American Society for Testing and Materials (ASTM) D638, two ends of the prepare sample were pulled at the pre-load of 0.01 kg/cm and the test speed of 50 mm/min using UTM (ZwichRoell) machine.
In this instance, the tensile strength was measured by dividing the force applied to the sample when the sample breaks by the initial cross-sectional area of the sample.

- Elastic modulus measurement

: The manufactured film was cut into 1 cm X 10 cm (horizontal dimension x vertical dimension) to prepare a sample. In accordance with American Society for Testing and Materials (ASTM) D638, two ends of the prepared sample were pulled at the pre-load of 0.01 kg/cm and the test speed of 50 mm/min using UTM (ZwichRoell) machine.
In this instance, the elastic modulus was measured as a value obtained by dividing the tensile strength by the strain in the linear stress-strain region.

- Elongation at break

: The manufactured film was cut into 1 cm X 10 cm (horizontal dimension x vertical dimension) to prepare a sample. In accordance with American Society for Testing and Materials (ASTM) D638, the elongation at break (%) was measured using the following equation by pulling two ends of the prepared sample at the pre-load of 0.01 kg/cm and the test speed of 50 mm/min using UTM (ZwichRoell) machine.

$$\text{Elongation at break } (\varepsilon) = \triangle L/L_0 \text{ X } 100 \, (\%)$$

In the above equation, $L_0$ denotes the initial length of the sample, and $\triangle L$ denotes a length change until the sample breaks.

[Table 1]

| Classification | Density (g/cm$^3$) | Measurement direction | Elastic modulus (MPa) | Tensile strength (MPa) | Elongation at break (%) |
|---|---|---|---|---|---|
| Comparative example 1 | 2.86 | MD direction | 40.4 | 0.9 | 7.8 |
| | | TD direction | 9.9 | 0.2 | 3.8 |
| Example 1 | 2.92 | MD direction | 44.0 | 0.8 | 9.4 |
| | | TD direction | 21.9 | 0.5 | 17.1 |
| Example 2 | 2.90 | MD direction | 42.0 | 0.7 | 8.1 |
| | | TD direction | 16.2 | 0.4 | 12.5 |

[Table 2]

| Classification | Ratio of elastic modulus in TD/ elastic modulus in MD | Ratio of tensile strength in TD/tensile strength in MD |
|---|---|---|
| Comparative example 1 | 0.25 | 0.22 |
| Example 1 | 0.50 | 0.63 |
| Example 2 | 0.39 | 0.57 |

As can be seen from the above results, it was confirmed that the electrode film according to comparative example 1 had very poor mechanical properties in TD, while the electrode films according to examples 1 and 2 had improved mechanical properties in MD and TD.

As each of the elastic modulus, tensile strength and elongation at break is higher, the electrode film has improved stability and efficiency of the process of manufacturing the electrode, so it was confirmed that the electrode films according to examples 1 and 2 had high stability and improved efficiency of the process of manufacturing the electrode.

[Description of Reference Numerals]

1        -Roll
10       -Electrode powder mixture
100      -Unit electrode film

**Claims**

1.   An electrode film, comprising:

two or more unit electrode film stacked in two or more layers, the unit electrode film comprising a fibrillized binder and an active material,
wherein machine directions (MDs) of the unit electrode films in contact with each other among the two or more stacked layers are antiparallel to each other.

2.   The electrode film according to claim 1, wherein an angle between the MDs of the unit electrode films in contact with each other among the two or more layers of unit electrode films is more than 0° and 90° or less.

3.   The electrode film according to claim 1, wherein an angle between the MDs of the unit electrode films in contact with each other among the two or more layers of unit electrode films is 45°to 90°.

4.   The electrode film according to claim 1, wherein an average thickness of the electrode film is 50 $\mu$m to 600 $\mu$m.

5.   The electrode film according to claim 1, wherein a ratio of a tensile strength measured in a direction perpendicular to the MD to a tensile strength measured in the MD of one of the two or more layers of stacked unit electrode films is 0.3 or more,
wherein the tensile strength are measured in accordance with ASTM D638.

6.   The electrode film according to claim 1, wherein a ratio of an elastic modulus measured in a direction perpendicular to the MD to an elastic modulus measured in the MD of one of the two or more layers of stacked unit electrode films is 0.3 or more,
wherein the elastic moduli are measured in accordance with ASTM D638.

7.   A method for manufacturing an electrode film, comprising:

mixing an active material and a binder to make a mixture;
blending the mixture at high temperature low shear conditions to make a mass of the mixture;
high shear grinding the mass of the mixture to make an electrode powder mixture;

feeding the electrode powder mixture in between a plurality of rolls to carry out calendaring to manufacture a unit electrode film;

stacking two of more of the unit electrode film in two or more layers such that machine directions (MDs) of the unit electrode films in contact with each other are antiparallel to each other to obtain a film stack; and

calendaring the film stack.

8. The method for manufacturing the electrode film according to claim 7, wherein the stacking comprises stacking such that an angle between the MDs of the unit electrode films in contact with each other among the two or more layers of unit electrode films is more than 0° and 90° or less.

9. The method for manufacturing the electrode film according to claim 7, wherein an average thickness of the electrode film is 50 $\mu$m to 600 $\mu$m.

10. An electrode, comprising:

a current collector; and

the electrode film according to any one of claims 1 to 6 on at least one surface of the current collector.

11. A method for manufacturing an electrode, comprising:

laminating the electrode film according to any one of claims 1 to 6 on at least one surface of a current collector.

12. A secondary battery in which an electrode assembly comprising a positive electrode, a negative electrode and a separator is included in a battery case together with a lithium containing nonaqueous electrolyte, wherein at least one of the positive electrode or the negative electrode is the electrode according to claim 10.

FIG. 1

FIG. 2

FIG. 3

## INTERNATIONAL SEARCH REPORT

| International application No. |
|---|
| **PCT/KR2023/003552** |

**A.    CLASSIFICATION OF SUBJECT MATTER**

**H01M 4/04**(2006.01)i; **H01M 4/139**(2010.01)i; **H01M 10/052**(2010.01)i

According to International Patent Classification (IPC) or to both national classification and IPC

**B.    FIELDS SEARCHED**

Minimum documentation searched (classification system followed by classification symbols)

H01M 4/04(2006.01); H01G 11/28(2013.01); H01G 11/86(2013.01); H01M 10/04(2006.01); H01M 10/28(2006.01); H01M 2/16(2006.01); H01M 4/36(2006.01); H01M 4/58(2010.01); H01M 4/80(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 섬유화 바인더(fibrillized binder), 건식 전극(dry electrode), 자립형 필름(free-stand ing film), 다층 전극(multi layer electrode), 기계방향(machine direction), 적층(stack), 엇갈림(cross)

**C.    DOCUMENTS CONSIDERED TO BE RELEVANT**

| Category* | Citation of document, with indication, where appropriate, of the relevant passages | Relevant to claim No. |
|---|---|---|
| A | US 2020-0313175 A1 (MAXWELL TECHNOLOGIES, INC.) 01 October 2020 (2020-10-01)<br>See claims 1-21. | 1-12 |
| A | KR 10-2020-0083439 A (MAXWELL TECHNOLOGIES, INC.) 08 July 2020 (2020-07-08)<br>See claims 1-34. | 1-12 |
| A | KR 10-2021-0087943 A (MAXWELL TECHNOLOGIES, INC.) 13 July 2021 (2021-07-13)<br>See claims 1-45. | 1-12 |
| A | JP 08-069814 A (SUMITOMO ELECTRIC IND LTD.) 12 March 1996 (1996-03-12)<br>See entire document. | 1-12 |
| A | JP 2011-134525 A (NEC ENERGY DEVICES LTD.) 07 July 2011 (2011-07-07)<br>See entire document. | 1-12 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 July 2023** | **07 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/003552**

| Patent document cited in search report | | | Publication date (day/month/year) | Patent family member(s) | | | Publication date (day/month/year) |
|---|---|---|---|---|---|---|---|
| US | 2020-0313175 | A1 | 01 October 2020 | WO | 2020-205452 | A1 | 08 October 2020 |
| KR | 10-2020-0083439 | A | 08 July 2020 | CN | 111095645 | A | 01 May 2020 |
| | | | | EP | 3704756 | A2 | 09 September 2020 |
| | | | | JP | 2021-501961 | A | 21 January 2021 |
| | | | | US | 2019-139714 | A1 | 09 May 2019 |
| | | | | WO | 2019-089696 | A2 | 09 May 2019 |
| | | | | WO | 2019-089696 | A3 | 18 July 2019 |
| KR | 10-2021-0087943 | A | 13 July 2021 | CN | 113272994 | A | 17 August 2021 |
| | | | | EP | 3878034 | A1 | 15 September 2021 |
| | | | | JP | 2022-506188 | A | 17 January 2022 |
| | | | | US | 11367864 | B2 | 21 June 2022 |
| | | | | US | 2020-0152967 | A1 | 14 May 2020 |
| | | | | US | 2022-238858 | A1 | 28 July 2022 |
| | | | | WO | 2020-097322 | A1 | 14 May 2020 |
| JP | 08-069814 | A | 12 March 1996 | | None | | |
| JP | 2011-134525 | A | 07 July 2011 | WO | 2011-077989 | A1 | 30 June 2011 |

Form PCT/ISA/210 (patent family annex) (July 2022)

**EP 4 394 912 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220032853